# EUROPEAN PATENT APPLICATION

(11) **EP 4 579 282 A1**
(43) Date of publication of application: **02.07.2025**
(21) Application number: 24219265.6
(22) Date of filing: 12.12.2024
(51) Int. Cl.: G01S 13/931, B60W 60/00, G01S 13/50, G01S 13/86, G01S 17/50, G08G 1/048

(54) **MIULTI-SENSOR DATA FUSION METHOD, STORAGE MEDIUM, AND SMART DEVICE**

(30) Priority: 25.12.2023 CN 202311790558
(71) Applicant: Anhui NIO Autonomous Driving Technology Co., Ltd., Hefei, Anhui 230601 (CN)
(72) Inventor: WANG, Shengcong, Shanghai (CN); XIONG, Qi, Shanghai (CN); ZHENG, Jianfeng, Shanghai (CN); LIANG, Ji, Shanghai (CN); SUN, Lei, Shanghai (CN)
(74) Representative: Vossius & Partner Patentanwälte Rechtsanwälte mbB

(57) **Abstract**

The invention relates to the field of autonomous driving technologies, and specifically provides a multi-sensor data fusion method, a storage medium, and a smart device, which are intended to solve the problem of how to improve the effect of multi-sensor data fusion. The method provided in the invention includes performing one-time data fusion on a plurality of sensors by: obtaining sensor data collected from each sensor, where the data includes target information about one or more targets, and the target information includes attribute information of one or more attributes of each target and a confidence level of the attribute information; for each attribute of each target, obtaining all attribute information from all sensor data, and performing filtering based on a confidence level to obtain final attribute information; and obtaining a data fusion result based on the final attribute information of all the attributes of all the targets and confidence levels thereof. With the above method, only one-time data fusion of a plurality of sensors is required, and advantages of each sensor can be fully utilized, which significantly improves the effect of data fusion.

## Description

The present application claims priority of CN patent application 202311790558.X filed on December 25, 2023 with the title "Multi-sensor data fusion method, storage medium, and smart device", the entire of which is incorporated herein by reference.

### Technical Field

The invention relates to the field of autonomous driving technologies, and specifically provides a multi-sensor data fusion method, a storage medium, and a smart device.

### Background Art

When autonomous driving control is performed on a vehicle, sensor data collected from a plurality of types of sensors (such as a camera and a Lidar) configured on the vehicle are usually used for perception, to obtain targets such as obstacles surrounding the vehicle, and then a vehicle trajectory is planned based on perception results, such that the vehicle is controlled to drive according to the vehicle trajectory. Before using the sensor data collected from the above plurality of types of sensors for perception, it is usually necessary to first fuse the sensor data, and then perceive fused data.

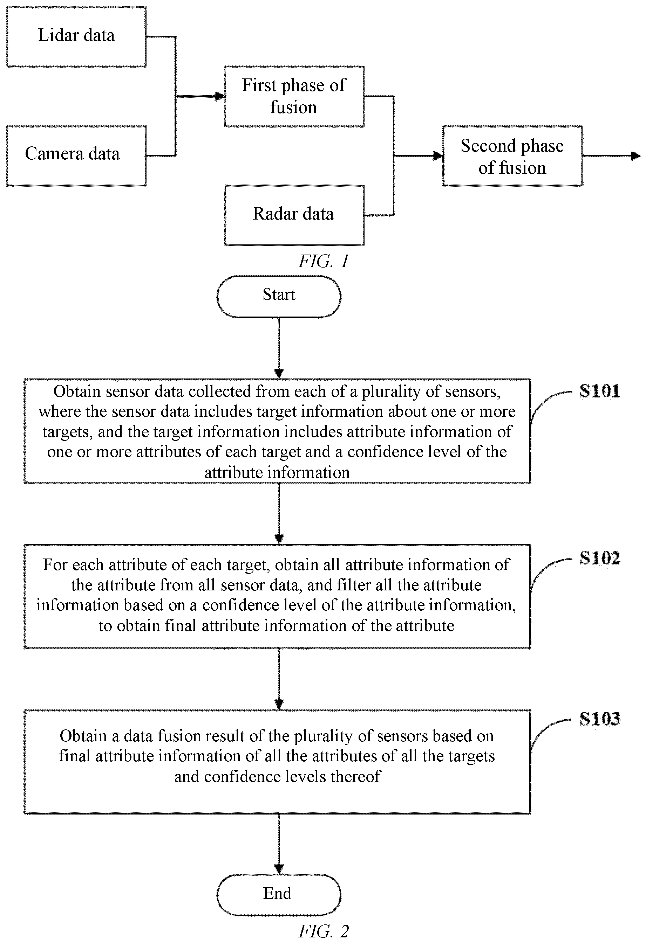

Currently, for fusion of sensor data collected from three or more types of sensors, phased fusion is mainly used. As shown in FIG. 1, for three types of sensors, namely, a Lidar, a radar and a camera, their data may be fused in two phases. In the first phase, the Lidar data and the camera data are fused, and a fusion result is output to the second phase. In the second phase, the fusion result obtained in the first phase and the radar data are fused. However, this method has the following disadvantages. In the first phase, due to lack of the radar data, no radar data is available for verification and optimization when an anomaly occurs in the Lidar or the camera. In the second phase, only fused information for the fusion result obtained in the first phase and the radar data is obtained, and the raw data of the Lidar and the camera is unavailable. As a result of the above reasons, the effect of data fusion is poor, and the advantages of each sensor cannot be fully utilized. If a fusion result obtained using this method is used for perception, the accuracy of perception may be reduced, which in turn affects the driving safety and reliability of the vehicle.

Accordingly, there is a need in the art for a new technical solution to solve the above problem.

### Summary

To overcome the above disadvantages, the invention is proposed to provide a multi-sensor data fusion method, a storage medium, and a smart device that solve or at least partially solve the technical problem of how to improve the fusion effect in fusing sensor data from three or more types of sensors.

According to a first aspect, a multi-sensor data fusion method is provided. The method includes performing one-time data fusion on a plurality of sensors by:
obtaining sensor data collected from each of a plurality of sensors, where the sensor data includes target information about one or more targets, and the target information includes attribute information of one or more attributes of each target and a confidence level of the attribute information;
for each attribute of each target, obtaining all attribute information of the attribute from all sensor data, and filtering all the attribute information based on a confidence level of the attribute information, to obtain final attribute information of the attribute; and
obtaining a data fusion result of the plurality of sensors based on final attribute information of all the attributes of all the targets and confidence levels thereof.

In a technical solution of the above multi-sensor data fusion method, the filtering all the attribute information to obtain final attribute information of the attribute includes:
obtaining attribute information with a highest confidence level from all the attribute information; and
using the attribute information with a highest confidence level as the final attribute information.

In a technical solution of the above multi-sensor data fusion method, the filtering all the attribute information to obtain final attribute information of the attribute further includes:
if all the attribute information includes only one piece of attribute information, using the piece of attribute information as the final attribute information.

In a technical solution of the above multi-sensor data fusion method, before the obtaining all attribute information of the attribute from all sensor data, the method further includes: associating attribute information belonging to the same target in all the sensor data; and
the obtaining all attribute information of the attribute from all sensor data includes: separately obtaining all the attribute information of each target based on association results, and separately obtaining all the attribute information of each attribute of each target based on all the attribute information of each target.

In a technical solution of the above multi-sensor data fusion method, after the associating attribute information belonging to the same target in all the sensor data, the method further includes:
performing misassociation suppression on the association results to avoid associating attribute information belonging to different targets; and
using results obtained after the misassociation suppression as final association results.

In a technical solution of the above multi-sensor data fusion method, after the obtaining sensor data collected from each of a plurality of sensors, the method further includes:
performing validity verification on the sensor data collected from all the sensors to obtain valid sensor data, so as to obtain the data fusion result of the plurality of sensors based on the valid sensor data.

In a technical solution of the above multi-sensor data fusion method, after the obtaining sensor data collected from each of a plurality of sensors, the method further includes:
aligning timestamps of the sensor data collected from all the sensors to obtain sensor data with aligned timestamps, so as to obtain the data fusion result of the plurality of sensors based on the sensor data with aligned timestamps.

In a technical solution of the above multi-sensor data fusion method, after the obtaining sensor data collected from each of a plurality of sensors, the method further includes:
aligning spatial coordinate systems of the sensor data collected from all the sensors to obtain sensor data with aligned spatial coordinate systems, so as to obtain the data fusion result of the plurality of sensors based on the sensor data with aligned spatial coordinate systems.

According to a second aspect, a computer-readable storage medium is provided. A plurality of program codes are stored in the computer-readable storage medium, and the program codes are adapted to be loaded and executed by at least one processor to perform the method in any one of the technical solutions of the above multi-sensor data fusion method.

According to a third aspect, a smart device is provided. The smart device includes: at least one processor; and a memory in communication connection with the at least one processor, where the memory stores a computer program that, when executed by the at least one processor, implements the method in any one of the technical solutions of the above multi-sensor data fusion method.

The above one or more technical solutions of the invention have at least one or more of the following beneficial effects.

In the technical solutions for implementing the multi-sensor data fusion method according to the invention, the one-time data fusion may be performed on the plurality of sensors by: obtaining sensor data collected from each of a plurality of sensors, where the sensor data includes target information about one or more targets, and the target information includes attribute information of one or more attributes of each target and a confidence level of the attribute information; for each attribute of each target, obtaining all attribute information of the attribute from all sensor data, and filtering all the attribute information based on a confidence level of the attribute information, to obtain final attribute information of the attribute; and obtaining a data fusion result of the plurality of sensors based on final attribute information of all the attributes of all the targets and confidence levels thereof. Based on the above implementation, only one-time fusion of a plurality of sensors is required, and the advantages of each sensor can be fully utilized in the one-time fusion, such that the effect of data fusion is improved, and the accuracy of target perception based on the fused data is also improved, thereby improving the reliability and safety of autonomous driving control based on target perception, that is, improving the performance of autonomous driving. Further, compared with a phased fusion method used in the prior art, the above implementation can also significantly reduce the consumption of hardware and software resources because only one-time fusion is required.

### Brief Description of the Drawings

The disclosed content of the invention will become more readily understood with reference to the accompanying drawings. Those skilled in the art readily understand that these accompanying drawings are merely for illustrative purposes and are not intended to limit the scope of protection of the invention. In the drawings:
FIG. 1 is a schematic diagram of two-phase fusion of sensor data from three sensors in the prior art;
FIG. 2 is a schematic flowchart of main steps of a multi-sensor data fusion method according to an embodiment of the invention;
FIG. 3 is a schematic diagram of fusion of sensor data from a plurality of sensors according to an embodiment of the invention;
FIG. 4 is a schematic flowchart of main steps of a method for obtaining final attribute information of an attribute according to an embodiment of the invention;
FIG. 5 is a schematic flowchart of main steps of a multi-sensor data fusion method according to another embodiment of the invention; and
FIG. 6 is a schematic diagram of a main structure of a smart device according to an embodiment of the invention.

List of reference signs:
11: Memory; 12: Processor.

### Detailed Description of Embodiments

Some implementations of the invention are described below with reference to the accompanying drawings. Those skilled in the art should understand that these implementations are only used to explain the technical principles of the invention, and are not intended to limit the scope of protection of the invention.

In the description of the invention, a "processor" may include hardware, software, or a combination thereof. The processor may be a central processing unit, a microprocessor, a graphics processing unit, a digital signal processor, or any other suitable processor. The processor has a data and/or signal processing function. The processor may be implemented in software, hardware, or a combination thereof. A computer-readable storage medium includes any suitable medium that can store program code, such as a magnetic disk, a hard disk, an optical disc, a flash memory, a read-only memory, or a random access memory.

The related user personal information that may be involved in the embodiments of the invention is all personal information that is provided actively by a user in a process of using a product/service or is generated by using a product/service and that is obtained through authorization by the user based on an appropriate purpose of a service scenario strictly in accordance with requirements of laws and regulations and in accordance with the principles of legality, legitimacy, and necessity.

The user personal information processed in the invention varies depending on the specific product/service scenario, and shall be subject to the specific scenario in which the user uses the product/service. It may involve account information, device information, driving information, vehicle information, or other related information of the user. The user's personal information and processing thereof shall be treated in the invention with a high degree of diligence.

The invention attaches great importance to the security of the user personal information, and reasonable and feasible security protection measures that comply with industry standards have been taken to protect information of the user and prevent the personal information from unauthorized access, public disclosure, use, modification, damage or loss.

An embodiment of a multi-sensor data fusion method provided in the invention is described below.

Referring to FIG. 2, FIG. 2 is a schematic flowchart of main steps of a multi-sensor data fusion method according to an embodiment of the invention. As shown in FIG. 2, in the multi-sensor data fusion method according to this embodiment of the invention, one-time data fusion may be performed on a plurality of sensors through steps S101 to S 103 below.

Step S101: Obtain sensor data collected from each of the plurality of sensors.

The sensor data includes target information about one or more targets, and the target information includes attribute information of one or more attributes of each target and a confidence level of the attribute information.

The target includes, but is not limited to, a vehicle, a pedestrian, a non-motor vehicle, etc., and the attribute of the target includes, but is not limited to, a position, a category, a velocity, an acceleration, an angle, etc. of the target.

For example, the sensor, which is used as a camera, may perform target perception on an image output by the sensor, to obtain target information about a target in the image, and the target information can form sensor data of the camera.

Step S 102: For each attribute of each target, obtain all attribute information of the attribute from all sensor data, and filter all the attribute information based on a confidence level of the attribute information, to obtain final attribute information of the attribute.

A higher confidence level indicates a higher degree of credibility of the attribute information. Otherwise, a lower confidence level indicates a lower degree of credibility of the attribute information. The method for obtaining the confidence level is not specifically limited in this embodiment, as long as the sensor data including the confidence level can be obtained.

The obtained final attribute information of the attributes is described briefly below by way of an example shown in Table 1. As shown in Table 1 below, sensor data of a Lidar includes attribute information of three attributes, namely Position, Category, and Velocity, of a target A; the sensor data of the camera includes attribute information of four attributes, namely Position, Category, Velocity, and Size, of the target A; and sensor data of a radar includes information of four attributes, namely Position, Velocity, Acceleration, and Angle, of the target A. The attribute information of Position includes a1, b1, and c1, and one of which is selected as the final attribute information of Position separately based on confidence levels of a1, b1, and c1.

**Table 1**

| | Position | Category | Velocity | Size | Acceleration | Angle |
|---|---|---|---|---|---|---|
| Lidar | a1 | a2 | a3 | | | |
| Camera | b1 | b2 | b3 | b4 | | |
| Radar | c1 | | c3 | | c5 | c6 |

Step S 103: Obtain a data fusion result of the plurality of sensors based on final attribute information of all the attributes of all the targets and confidence levels thereof.

Specifically, the final attribute information of all the attributes of all the targets and the confidence levels thereof may be directly used as the data fusion result.

Still referring to the example of Table 1, and assuming that the pieces of final attribute information of Position, Category, Velocity, Size, Acceleration, and Angle are respectively a1, a2, a3, b4, c5, and c6, the pieces of attribute information a1, a2, a3, b4, c5, and c6 of the target A are directly used as the data fusion result for the target A.

Based on the method described in the above steps S 101 to S103, the sensor data collected from all the sensors can be filtered for each attribute of the target, which allows the advantages of each sensor to be fully utilized, thereby improving the effect of data fusion. In addition, based on the above method, only one-time fusion of a plurality of sensors is required, which can significantly reduce the consumption of hardware and/or software resources compared with a phased fusion method used in the prior art.

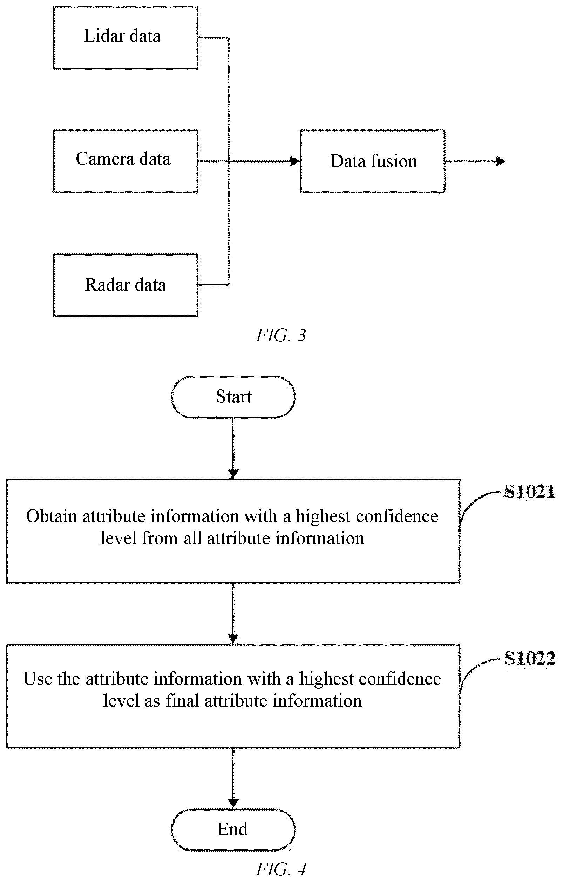

The technical effect of the above method is described briefly below again with reference to FIG. 1 and FIG. 3. Referring to FIG. 1, Lidar data, camera data, and radar data are fused in two phases in the prior art. In the first phase of fusion, the Lidar data and the camera data are fused, and in the second phase of fusion, a result obtained in the first phase of fusion and the radar data are fused. It is assumed that the velocities of the target are fused in the first phase of fusion, and the positions of the target are fused in the second phase of fusion. Generally, both the velocity collected by the Lidar and the velocity collected by the radar have a higher accuracy than the velocity collected based on the camera data. Therefore, for the result obtained in the first phase of fusion, the velocity collected by the Lidar should be output as the velocity of the target. However, if the velocity collected by the Lidar has a lower accuracy than the velocity collected based on the camera data due to an anomaly in the Lidar, the velocity collected based on the camera data will be fused as the velocity of the target in the first phase of fusion. Upon entry into the second phase, the categories of the target are fused, and the velocities of the target are no longer fused. In this case, although the velocity collected by the radar has a higher accuracy than the velocity collected based on the camera data, this advantage of the radar cannot be fully utilized in the second phase. Consequently, after the two-phase fusion is completed, the velocity collected based on the camera data is used as the final velocity of the target, which reduces the accuracy of the fused data in terms of the attribute of Velocity.

Referring to FIG. 3, the data fusion method of the invention is used to perform one-time fusion on the Lidar data, the camera data, and the radar data. The one-time fusion is performed on all attributes of the target. Even if the velocity collected by the Lidar has a lower accuracy than the velocity collected based on the camera data due to an anomaly in the Lidar, the velocity collected by the radar can still be used as the final velocity of the target, which allows the advantages of the radar to be fully utilized in terms of velocity detection.

The above step S 102 is further described below.

In some implementations of the above step S102, the final attribute information of the attribute may be obtained through the following steps S 1021 and S 1022 shown in FIG. 4.

Step S 1021: Obtain attribute information with a highest confidence level from all the attribute information.

Step S1022: Use the attribute information with a highest confidence level as the final attribute information.

In some implementations, if all the attribute information includes only one piece of attribute information, the piece of attribute information is used as the final attribute information. Based on this, the final attribute information can be obtained even if all the attribute information includes only one piece of attribute information.

In the method described in the above steps S1021 and S1022, since a higher confidence level indicates a higher degree of credibility of the attribute information, obtaining the attribute information with a highest confidence level may ensure the accuracy of the attribute information to the greatest extent.

In the multi-sensor data fusion method according to an embodiment of the invention, in addition to the above steps S101 to S103 being included, a step of data association may further be included before step S 102 is performed. In this data association step, the attribute information belonging to the same target in all the sensor data may be associated. Further, when proceeding to step S102 of obtaining all attribute information of the attribute from all sensor data, the process may involve separately obtaining all the attribute information of each target based on association results, and separately obtaining all the attribute information of each attribute of each target based on all the attribute information of each target. Through data association, all the attribute information about the same target can be quickly and accurately obtained, which is more conducive to quickly and accurately obtaining all the attribute information of each attribute of each target.

In some implementations, in the above step of data association, after the attribute information belonging to the same target in all the sensor data is associated, misassociation suppression can be performed on the association results to avoid associating attribute information belonging to different targets, and the results obtained after the misassociation suppression are used as final association results. In this embodiment, misassociaton suppression of the association results may be performed by using a conventional method in the field of autonomous driving technologies. The method for performing misassociation suppression is not specifically limited in this embodiment, as long as misassociation suppression can be performed on the association results to avoid associating the attribute information belonging to different targets. For example, a pedestrian usually does not change their position information abruptly. Therefore, if a position collected by the camera and a position collected by the Lidar are associated, and then it is detected that the two positions have a relatively large deviation, it indicates that the two positions may not be of the same target. In this case, the two positions are no longer associated.

In the multi-sensor data fusion method according to an embodiment of the invention, a step of data preprocessing may further be included before step S 102 is performed, and step S 102 is performed after the step of data preprocessing has been performed. The step of data preprocessing is described below.

In some implementations, the above step of data preprocessing may include performing validity verification on the sensor data collected from all the sensors to obtain valid sensor data, so as to obtain the data fusion result of the plurality of sensors based on the valid sensor data. In this embodiment, validity verification of the sensor data may be performed by using a conventional method in the field of autonomous driving technologies, as long as valid sensor data can be obtained. For example, it may be detected whether an anomaly occurs in a sensor, and if an anomaly occurs in the sensor, it is determined that sensor data collected from the sensor is not valid data.

In some implementations, the above step of data preprocessing may further include aligning timestamps of the sensor data collected from all the sensors to obtain sensor data with aligned timestamps, so as to obtain the data fusion result of the plurality of sensors based on the sensor data with aligned timestamps. In this embodiment, the alignment of the timestamps of the sensor data may be performed by using a conventional method in the field of autonomous driving technologies, as long as it is ensured that the timestamps of the sensor data from all the sensors are aligned. For example, the sensor data of all the sensors can be synchronized to the same timeline based on the timestamps of the sensor data from all the sensors.

In some implementations, the above step of data preprocessing may further include aligning spatial coordinate systems of the sensor data collected from all the sensors to obtain sensor data with aligned spatial coordinate systems, so as to obtain the data fusion result of the plurality of sensors based on the sensor data with aligned spatial coordinate systems. In this embodiment, the alignment of the spatial coordinate systems of the sensor data may be performed by using a conventional method in the field of autonomous driving technologies, as long as it is ensured that the spatial coordinate systems of the sensor data from all the sensors are aligned. For example, the sensor data from all the sensors can be converted from their respective spatial coordinate systems to the same spatial coordinate system by means of coordinate conversion. For example, a camera, Lidar, and radar on a vehicle are respectively converted from a camera coordinate system, Lidar coordinate system, and radar coordinate system to a vehicle coordinate system.

In the data fusion method according to an embodiment of the invention, any one, two, or all of the above three steps of data preprocessing may be used.

The step of data preprocessing has been described above.

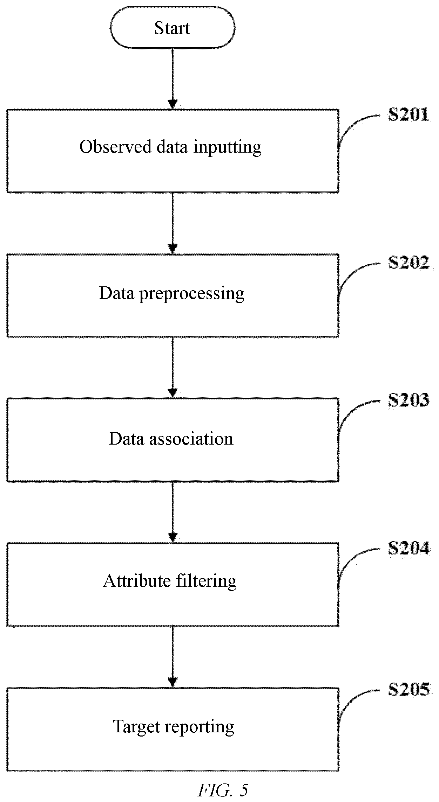

Further, in some implementations, data fusion of the sensor data from the plurality of sensors can be performed based on the method described in the above steps S 101 to S103 and in combination with the above steps of data preprocessing and data association. Specifically, in this implementation, data fusion may be performed on the sensor data through the following steps S201 to S205 shown in FIG. 5.

Step S201: Observed data inputting.

Observed data includes sensor data of the camera, sensor data of the Lidar, and sensor data of the radar. The sensor data of the camera includes attribute information of three attributes, namely Position, Category, and Velocity, of a target and confidence levels of the three pieces of attribute information; the sensor data of the Lidar includes attribute information of four attributes, namely Size, Position, Category, and Velocity, of the target and confidence levels of the four pieces of attribute information; and the sensor data of the radar includes attribute information of four attributes, namely Position, Velocity, Angle, and Acceleration of the target and confidence levels of the four pieces of attribute information.

Step S202: Data preprocessing.

Specifically, validity verification, alignment of timestamps, and alignment of spatial coordinate systems may be performed on the observed data. In addition, the observed data may also be converted into a uniform data format.

Step S203: Data association.

For example, the camera, the Lidar, and the radar being provided on an autonomous vehicle is used as an example. The targets obtained through these sensors may include targets in front of the vehicle, targets on both sides of the vehicle, and remote targets. Through data association, all attribute information about these three types of targets may be obtained separately.

Step S204: Attribute filtering.

In this step, attribute filtering may be performed by using the method described in the above step S102, to obtain the final attribute information of each attribute of each target.

Step S205: Target reporting.

In this step, the final attribute information of all the attributes of all the targets and the confidence levels thereof can be obtained as the data fusion result by using the method described in the above step S103, and fused information about each target is output based on the data fusion result, that is, the final attribute information of each attribute of this target is output.

Based on the method described in the above steps S201 to S205, the fusion effect of data fusion can be significantly improved, and the accuracy of target perception based on the fused data is also improved, thereby improving the reliability and safety of autonomous driving control based on target perception, that is, improving the performance of autonomous driving.

In an application scenario according to an embodiment of the invention, a module capable of performing the data fusion method according to the embodiment of the invention may be provided on the autonomous driving vehicle. During autonomous driving of the vehicle, the module is used to obtain sensor data collected from a plurality of sensors on the vehicle, perform data fusion to obtain a data fusion result, and send the data fusion result to a planning and control module. The planning and control module can plan a driving trajectory for the vehicle based on target information about each target in the data fusion result, such that the vehicle is controlled to drive autonomously according to the driving trajectory.

It should be noted that, although the steps are described in a specific order in the above embodiments, those skilled in the art may understand that in order to implement the effects of the invention, different steps are not necessarily performed in such an order, but may be performed simultaneously (in parallel) or in other orders. These adjusted solutions and the technical solutions described in the invention are equivalent technical solutions and shall all fall within the scope of protection of the invention.

Those skilled in the art may understand that all or some of the procedures in the methods in the foregoing embodiments of the invention may be implemented by using a computer program instructing related hardware. The computer program may be stored in a computer-readable storage medium. When the computer program is executed by a processor, the steps in the foregoing method embodiments may be implemented. The computer program includes computer program code, and the computer program code may be in the form of source code, target code, and an executable file, or in some intermediate forms, etc. The computer-readable storage medium may include: any entity or apparatus that can carry the computer program code, a medium, a USB flash drive, a removable hard disk, a magnetic disk, an optical disc, a computer memory, a read-only memory, a random access memory, an electric carrier signal, a telecommunications signal, and a software distribution medium. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

According to another aspect of the invention, a computer-readable storage medium is further provided.

In an embodiment of the computer-readable storage medium according to the invention, the computer-readable storage medium may be configured to store a program for performing the multi-sensor data fusion method of the above method embodiment, and the program may be loaded and executed by at least one processor to implement the above multi-sensor data fusion method. For ease of description, only parts related to the embodiments of the invention are shown. For specific technical details that are not disclosed, refer to the method part of the embodiments of the invention. The computer-readable storage medium may be a storage apparatus device formed by various electronic devices. Optionally, the computer-readable storage medium in this embodiment of the invention is a non-transitory computer-readable storage medium.

According to another aspect of the invention, a smart device is further provided.

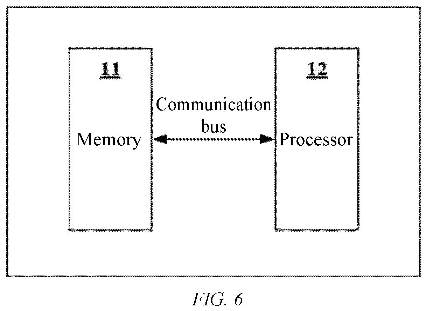

In an embodiment of the smart device according to the invention, the smart device may include: at least one processor; and a memory in communication connection with the at least one processor, where the memory stores at least one computer program that, when executed by the at least one processor, implements the method described in any one of the above embodiments. The smart device according to the invention may include a driving device, a smart vehicle, a robot, etc. Referring to FIG. 6, FIG. 6 exemplarily shows a communication connection established between a memory 11 and a processor 12 through a bus.

In some embodiments of the invention, the smart device may further include at least one sensor for sensing information. The sensor is in communication connection with any type of processor mentioned in the invention. Optionally, the smart device may further include an automated driving system configured to guide the smart device to drive autonomously or assist in driving. The processor communicates with the sensor and/or the automated driving system to perform the method according to any one of the above embodiments.

Heretofore, the technical solutions of the invention have been described in combination with the implementations shown in accompanying drawings. However, those skilled in the art can readily understand that the scope of protection of the invention is apparently not limited to these particular implementations. Those skilled in the art can make equivalent changes or substitutions to the related technical features without departing from the principle of the invention, and all the technical solutions with such changes or substitutions shall fall within the scope of protection of the invention.

## Claims

1. A multi-sensor data fusion method, comprising performing one-time data fusion on a plurality of sensors by:
obtaining sensor data collected from each of a plurality of sensors, wherein the sensor data comprises target information about one or more targets, and the target information comprises attribute information of one or more attributes of each target and a confidence level of the attribute information;
for each attribute of each target, obtaining all attribute information of the attribute from all sensor data, and filtering all the attribute information based on a confidence level of the attribute information, to obtain final attribute information of the attribute; and
obtaining a data fusion result of the plurality of sensors based on final attribute information of all the attributes of all the targets and confidence levels thereof.

2. The method according to claim 1, wherein the filtering all the attribute information to obtain final attribute information of the attribute comprises:
obtaining attribute information with a highest confidence level from all the attribute information; and
using the attribute information with a highest confidence level as the final attribute information.

3. The method according to claim 1 or 2, wherein the filtering all the attribute information to obtain final attribute information of the attribute further comprises:
if all the attribute information comprises only one piece of attribute information, using the piece of attribute information as the final attribute information.

4. The method according to any one of claims 1 to 3, wherein
before the obtaining all attribute information of the attribute from all sensor data, the method further comprises: associating attribute information belonging to the same target in all the sensor data; and
the obtaining all attribute information of the attribute from all sensor data comprises: separately obtaining all the attribute information of each target based on association results, and separately obtaining all the attribute information of each attribute of each target based on all the attribute information of each target.

5. The method according to claim 4, wherein after the associating attribute information belonging to the same target in all the sensor data, the method further comprises:
performing misassociation suppression on the association results to avoid associating attribute information belonging to different targets; and
using results obtained after the misassociation suppression as final association results.

6. The method according to any one of claims 1 to 5, wherein after the obtaining sensor data collected from each of a plurality of sensors, the method further comprises:
performing validity verification on the sensor data collected from all the sensors to obtain valid sensor data, so as to obtain the data fusion result of the plurality of sensors based on the valid sensor data.

7. The method according to any one of claims 1 to 6, wherein after the obtaining sensor data collected from each of a plurality of sensors, the method further comprises:
aligning timestamps of the sensor data collected from all the sensors to obtain sensor data with aligned timestamps, so as to obtain the data fusion result of the plurality of sensors based on the sensor data with aligned timestamps.

8. The method according to any one of claims 1 to 7, wherein after the obtaining sensor data collected from each of a plurality of sensors, the method further comprises:
aligning spatial coordinate systems of the sensor data collected from all the sensors to obtain sensor data with aligned spatial coordinate systems, so as to obtain the data fusion result of the plurality of sensors based on the sensor data with aligned spatial coordinate systems.

9. A non-transitory computer-readable storage medium having stored therein a plurality of program codes, wherein the program codes are adapted to be loaded and executed by at least one processor to perform the multi-sensor data fusion method according to any one of claims 1 to 8.

10. A smart device, comprising:
at least one processor;
and a memory in communication connection with the at least one processor,
wherein the memory stores a computer program that, when executed by the at least one processor, implements the multi-sensor data fusion method according to any one of claims 1 to 8.
